# FASCICULE DE BREVET EUROPEEN

(11) **EP 0 914 241 B1**
(45) Date de publication et mention de la délivrance du brevet: **01.03.2000**
(21) Numéro de dépôt: 97928321.5
(22) Date de dépôt: 10.06.1997
(51) Int. Cl.: B29C 59/12

(54) **PROCEDE DE TRAITEMENT DE SURFACE PAR VOIE SECHE ET DISPOSITIF POUR LA MISE EN OEUVRE D'UN TEL PROCEDE**
VERFAHREN ZUM BEHANDELN EINER OBERFLÄCHE DURCH EINEN TROCKENPROZESS UND VORRICHTUNG ZUM AUSFÜHREN DES VERFAHRENS
METHOD FOR TREATING A SURFACE BY DRY PROCESS AND DEVICE FOR IMPLEMENTING SAME

(30) Priorité: 02.07.1996 FR 9608230
(43) Date de publication de la demande: 12.05.1999
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: SINDZINGRE, Thierry, F-94230 Cachan (FR); RABIA, Stéphane, 14, rés. du Parc du Château, F-91190 Gif-sur-Yvette (FR)
(74) Mandataire: Mellul, Sylvie Lisette
(86) Numéro de dépôt international: FR9701027
(87) Numéro de publication internationale: WO9800284

(56) Documents cités:
- EP-A- 0 606 014
- DE-A- 3 619 694
- FR-A- 1 421 884
- FR-A- 2 692 730
- FR-A- 2 711 680
- US-A- 3 484 363
- US-A- 4 946 568

## Description

La présente invention se rapporte à un procédé de traitement de surface par voie sèche d'au moins une portion de surface d'un objet, elle s'adresse en particulier au traitement de surfaces de pièces en matériau polymère, par exemple pour en modifier la mouillabilité.

En considérant l'exemple des matériaux polymères, il est connu qu'une surface polymère n'est pas mouillée au contact de l'eau. En effet, l'eau au contact d'une telle surface forme des gouttelettes et non pas un film continu.

Il est cependant souhaitable, dans certaines circonstances ou pour certaines applications, de disposer de surfaces polymères susceptibles d'être mouillées par de l'eau ou en général par un fluide (par exemple un encre ou une peinture).

Le procédé de traitement de telles surfaces polymères le plus répandu est constitué par le traitement dit "par décharge couronne". Un tel procédé permet de modifier, à relativement faible coût, la mouillabilité d'une surface polymère et s'emploie déjà très largement à l'échelle industrielle.

Cependant, un tel procédé présente de nombreux inconvénients, notamment en raison du fait qu'il n'est adapté que pour le traitement de films polymères de faible épaisseur et qu'il n'est dès lors pas susceptible de traiter des surfaces polymères de pièces de grandes dimensions et, de manière générale, de pièces tridimensionnelles (on conçoit en particulier les difficultés importantes rencontrées par exemple pour l'adaptation au traitement de pièces de carrosserie automobile).

La Demanderesse a récemment proposé, dans le document EP-A-370870, un procédé de fluxage par voie sèche d'une surface métallique avant brasage ou étamage à l'aide d'un alliage, remarquable en ce que la surface à fluxer est traitée, à une pression voisine de la pression atmosphérique, par une atmosphère gazeuse de traitement comprenant des espèces excitées ou instables et substantiellement dépourvue d'espèces électriquement chargées, obtenue à partir du mélange gazeux délivré à la sortie de gaz d'un appareil de formation d'espèces gazeuses excitées ou instables.

Ce procédé est, dans ce document, tout particulièrement exemplifié et illustré à l'aide d'un appareil particulier de formation de molécules gazeuses excitées ou instables, fonctionnant sensiblement à la pression atmosphérique, décrit dans le document FR-A-2,692,730 au nom de la demanderesse.

Ces travaux apportaient incontestablement une première réponse intéressante à la question de la limitation des objets traitables en volume.

Le but de la présente invention est de pallier aux inconvénients déjà signalés, et de fournir un procédé et un dispositif de traitement de surface d'objets capable en outre de présenter une consommation en gaz relativement faible afin de pouvoir être compatible avec une utilisation à l'échelle industrielle pour de grandes quantités d'objets à traiter.

Elle a donc pour objet un procédé de traitement de surface par voie sèche d'au moins une portion de surface d'un objet, selon lequel on fait passer un gaz primaire dans au moins un appareil de formation d'espèces gazeuses excitées ou instables, et on amène la portion de surface en regard de la sortie de gaz de l'appareil , en vue de son traitement par un gaz secondaire délivré à la sortie de gaz, et comportant des espèces gazeuses excitées ou instables, et se caractérise en ce que le gaz secondaire délivré en sortie de l'appareil et utilisé pour le traitement est reaspiré par effet venturi et reinjecté dans l'appareil.

Le procédé selon l'invention peut en outre comporter une ou plusieurs caractéristiques suivantes :
- le gaz secondaire délivré à la sortie de gaz de l'appareil est substantiellement dépourvu d'espèces électriquement chargées ;
- le gaz secondaire est à une pression voisine de la pression atmosphérique. On entend par « pression voisine de la pression atmosphérique » selon l'invention une pression se situant dans l'intervalle allant de 0,1 x 10⁵ Pa à 3 x 10⁵ Pa;
- le gaz primaire comporte au moins un gaz choisi parmi les gaz inertes, les gaz oxydants, les gaz réducteurs;
- la surface à traiter est en un matériau polymère;
- la surface de l'objet à traiter est amenée en regard de la sortie de gaz de l'appareil, le cas échéant en regard des sorties de gaz de plusieurs appareils de formation d'espèces gazeuses excitées ou instables disposés en parallèle sur la largeur de l'objet et/ou successivement en regard des sorties de gaz de plusieurs appareils de formation d'espèces gazeuses excitées ou instables disposés en série, au moyen d'un système de convoyage traversant un espace intérieur délimité par une enceinte, l'enceinte étant raccordée de façon étanche à ou aux appareils ou incluant le ou les appareils.

L'invention a également pour objet un dispositif de traitement par voie sèche d'au moins une portion de surface d'un objet, comportant au moins un appareil de formation d'espèces gazeuses excitées ou instables comprenant un passage d'entrée de gaz en communication avec une source d'alimentation en un gaz primaire et un passage de sortie de gaz secondaire excité qui comporte des espèces excitées ou instables, et une enceinte définissant un espace intérieur, raccordée de façon étanche à ou aux appareil ou incluant le ou les appareil, le passage de sortie de gaz débouchant à l'intérieur de l'enceinte,
et se caractérisant en ce que en ce qu'il comporte, au niveau d'au moins un des appareils :
- un étranglement à effet Venturi disposé sur le trajet du gaz entre la source d'alimentation en gaz primaire et le passage d'entrée, et
- un canal de recirculation de gaz reliant l'espace intérieur de l'enceinte et une zone située en aval de l'étranglement,
afin de permettre, sous l'action du gaz primaire délivré par la source d'alimentation en gaz primaire, l'aspiration par effet Venturi du gaz situé dans l'enceinte pour le reinjecter dans l'appareil considéré de formation d'espèces gazeuses excitées ou instables.

Selon un mode de réalisation particulier, le dispositif comporte un système de convoyage de l'objet à l'intérieur de l'espace intérieur délimité par l'enceinte, apte à pourvoir amener la surface à traiter en regard du passage de sortie de gaz de l'appareil.

Selon un autre mode de réalisation de l'invention, l'appareil de formation d'espèces gazeuses excitées ou instables comporte, connectées à une source de haute tension alternative à haute fréquence, une première électrode excitatrice interne de forme cylindrique et une seconde électrode excitatrice externe de forme cylindrique et munie de fentes longitudinales sensiblement opposées constituant les passages d'entrée et de sortie de gaz, les première et seconde électrodes étant disposées de façon coaxiale et délimitant une chambre d'excitation de gaz, une couche d'un matériau diélectrique étant disposée sur la surface d'au moins une des électrodes en regard de l'autre électrode.

D'autres caractéristiques et avantages ressortiront de la description suivante, donnée uniquement à titre d'exemple, et faite en référence aux dessins annexés sur lesquels :
- la figure 1 est une vue schématique en coupe transversale d'un dispositif de traitement de surfaces selon l'art antérieur ;
- la figure 2 est une vue schématique en coupe transversale d'un dispositif de traitement de surface selon l'invention en représentation simplifiée sans étranglement à effet Venturi; et
- la figure 3 est une vue schématique en coupe transversale d'un dispositif de traitement de surface selon l'invention.

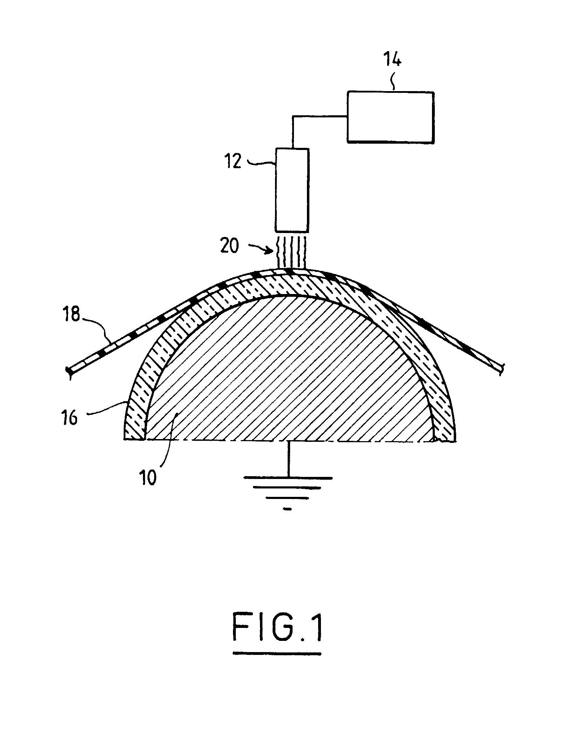

Sur la figure 1 on a représenté un dispositif de traitement de surface de films polymères par décharge couronne.

Ce dispositif de traitement de surfaces comporte une première électrode métallique 10, fictivement tronquée sur cette figure 1, de forme générale cylindrique et connectée à la masse, et une seconde électrode métallique 12 de section parallélépipédique, s'étendant parallèlement à l'axe de la première électrode 10 et connectée à une source de haute tension alternative à haute fréquence, désigné par la référence numérique 14.

La première électrode 10 est revêtue d'une couche de matériau diélectrique 16, par exemple une couche de céramique, sur laquelle circule un film polymère 18 à traiter.

On voit sur cette figure 1 que la seconde électrode métallique 12 est disposée en regard de la zone de contact entre le film polymère 18 et la couche diélectrique 16 et est séparée de la première électrode 10 d'un espace inter-électrode de l'ordre de quelques millimètres.

Ce dispositif est complété par une source d'alimentation en mélange gazeux de traitement, non représentée, adaptée pour délivrer dans la zone inter-électrode 20 le gaz de traitement (le plus souvent de l'air).

En fonctionnement, les électrodes 10 et 12 polarisées provoquent une décharge dans le gaz en vue de la formation d'espèces chimiques excitées ou instables (notamment d'espèces électriquement chargées) adaptées pour assurer le traitement de surfaces du film 18 en vue de modifier sa mouillabilité.

Comme cela a été mentionné précédemment, un tel dispositif assure de façon efficace le traitement de la surface d'un film polymère mais n'est pas adapté, en raison de la distance nécessairement faible entre les deux électrodes métalliques 10 et 12, au traitement de la surface de pièces de volume élevé.

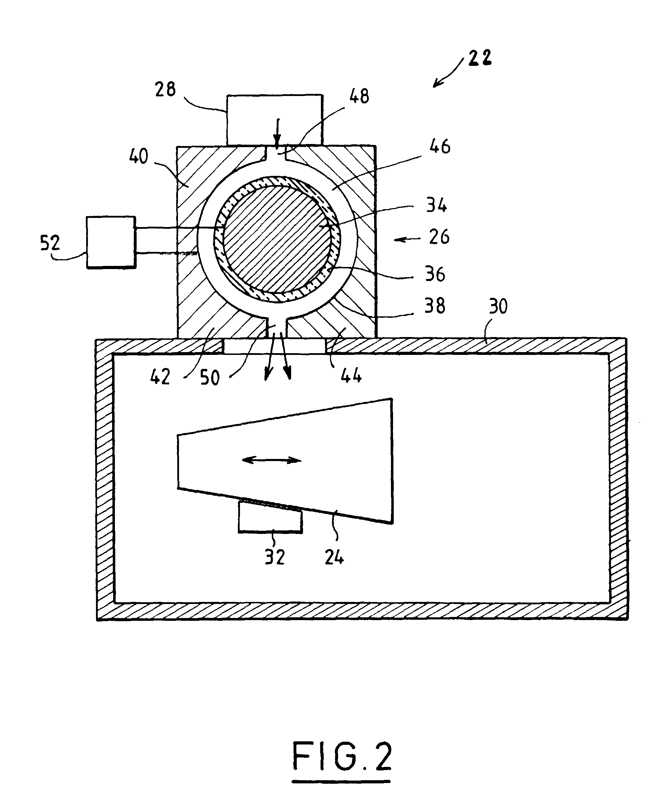

On a représenté sur la figure 2 un dispositif de traitement de surface permettant de pallier cet inconvénient, et désigné par la référence numérique générale 22.

Le dispositif de la figure 2 est une configuration simplifiée dépourvu d'étranglement à effet venturi, permettant de visualiser confortablement les différents gaz intervenant dans le traitement.

Ce dispositif est ici illustré dans le cas du traitement de la surface d'un gobelet 24 réalisé en matériau polymère en vue d'en modifier sa mouillabilité.

On voit sur cette figure 2 que le dispositif de traitement 22 comporte un appareil 26 de formation d'espèces gazeuses excitées ou instables alimenté en gaz primaire par une source 28 d'alimentation en gaz primaire et en communication avec une enceinte 30 dans laquelle est disposé un système 32 de convoyage, très schématiquement représenté, approprié pour déplacer l'objet-gobelet 24 de manière à présenter toute sa surface en regard de la sortie de gaz de l'appareil 26 de formation d'espèces gazeuses excitées ou instables.

L'appareil 26 de formation d'espèces excitées ou instables comporte, pour le mode de réalisation représenté, une première électrode excitatrice interne 34 de forme cylindrique et réalisée en matériau métallique. Elle est ici revêtue extérieurement d'une couche 36 de matériau diélectrique, par exemple une céramique.

L'appareil 26 comporte en outre une seconde électrode excitatrice externe 38 également de forme cylindrique. Cette seconde électrode externe 38 est formée par la face interne concave d'un bloc métallique 40 longitudinal et constitué par l'association de deux parties 42 et 44 complémentaires disposées en regard et espacées l'une de l'autre.

On pourra se reporter aux deux documents précédemment cités pour obtenir d'autres exemples d'appareils de formation d'espèces gazeuses excitées ou instables convenant pour la mise en oeuvre du procédé selon l'invention.

On voit également sur la figure 2 que les deux électrodes excitatrices 34 et 38 sont disposées de façon coaxiale et sont espacées l'une de l'autre de sorte que la seconde électrode excitatrice 38 soit espacée de la couche de matériau diélectrique 36 pour délimiter une chambre 46 d'excitation de gaz.

Comme mentionné précédemment, les deux parties 42 et 44 constitutives du bloc métallique 40 sont espacées et délimitent un passage d'entrée de gaz 48 dans la chambre d'excitation 46, en communication avec la source 28 d'alimentation en gaz primaire, et un passage de sortie de gaz secondaire 50 en communication avec l'espace intérieur de l'enceinte 30 et en regard duquel est placé ou amené l'objet 24 à traiter.

On voit enfin sur cette figure 2 que le dispositif de traitement de surface 22 est complété par une source 52 de haute tension alternative à haute fréquence connectée à l'électrode d'excitation interne 34 et à l'électrode d'excitation externe 38 en vue de leur polarisation.

Le fonctionnement de ce dispositif est le suivant.

Le gaz délivré par la source d'alimentation en gaz primaire 28 est fourni à une pression de l'ordre de quelques bars. Il est de préférence délivré, par des techniques connues appropriées, avec une vitesse constante le long du passage d'entrée de gaz 48.

Ce gaz est un gaz approprié pour l'utilisation envisagée, qu'il soit de type inerte ou oxydant ou encore réducteur (ou bien un mélange de tels types de gaz), par exemple de l'air ou de l'azote ou encore de l'hydrogène.

Le gaz primaire fourni par la source 28 circule dans la chambre d'excitation 46 entre les électrodes excitatrices interne 34 et externe 38.

Les électrodes 34 et 36 polarisées par la source 52 de haute tension créent de façon connue une décharge dans le gaz ou le mélange gazeux circulant dans cette chambre 46 pour engendrer, en sortie de la chambre d'excitation 46, un mélange gazeux ou un gaz (dit secondaire) comportant des espèces gazeuses instables ou excitées, ce gaz ou mélange gazeux étant ici sensiblement dépourvu d'espèces électriquement chargées.

L'absence substantielle d'espèces électriquement chargées dans l'atmosphère de traitement se révèle tout à fait avantageux dans de nombreux cas, qu'il s'agisse d'éviter les problèmes d'électricité statique dans les matériaux isolants, ou encore d'éviter d'induire un bombardement ionique et donc un effet de pulvérisation de la surface qui peut s'avérer préjudiciable lorsque la surface à traiter est recouverte d'un revêtement que l'on ne souhaite pas altérer.

On peut qualifier la configuration décrite et exemplifiée dans le cadre de la figure 2 comme une configuration de « post-décharge » dont les avantages sont nombreux parmi lesquels on peut cité :
- le fait déjà signalé que le gaz secondaire utilisé pour réaliser le traitement est recueilli en sortie de gaz de l'appareil, donc après recombinaison substantielle des espèces électriquement chargées;
- le fait que cette configuration permet de nettement séparer le lieu de génération (décharge) des espèces excitées ou instable du lieu de leur utilisation, ce qui limite considérablement les risques de pollution des électrodes du fait de dégagements divers résultant de l'opération de traitement de surface;
- enfin le fait que l'objet à traiter n'étant pas traité au sein de l'appareil (au sein de la décharge entre électrode ) comme c'est le cas du dispositif de la figure 1, le procédé selon l'invention bénéficie d'une bien meilleure flexibilité sur l'aspect distance et donc volume des objets que l'on peut traiter.

Le gaz secondaire délivré par le passage 50 de sortie de gaz est donc constitué d'un gaz sensiblement dépourvu d'espèces électriquement chargées et se situant à pression atmosphérique ou très voisine de la pression atmosphérique. Le gobelet 24 est alors présenté, sous l'action du système de convoyage 32 en regard du passage de sortie 50 de manière à être en contact du gaz secondaire excité.

A l'aide du système de convoyage 32 il est possible de présenter toute la surface du gobelet 24 au contact du gaz excité.

Des essais pratiqués sur des gobelets en matière plastique avec un gaz primaire constitué d'air ou d'azote avec un débit de l'ordre de 10 m³/h et avec une puissance électrique de décharge fixée à 850 W ont montré que la mouillabilité de la surface en plastique a été très sensiblement améliorée.

Un gobelet ainsi traité et trempé dans de l'eau présente sur sa surface un film continu d'eau et aucune gouttelette n'a été sensiblement détectée.

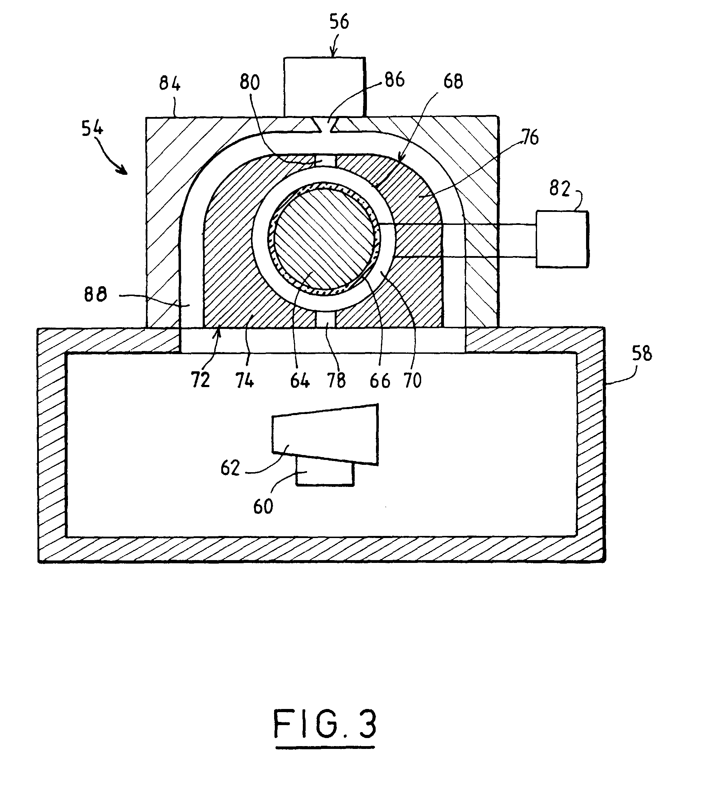

On a représenté sur la figure 3 un dispositif de traitement de surfaces de pièces polymères selon l'invention intégrant un étranglement à effet Venturi.

Comme dans l'exemple de réalisation précédent, décrit en référence à la figure 2, ce dispositif de traitement comporte un appareil d'excitation 54 alimenté en gaz par une source 56 de gaz primaire et en communication, en aval, avec une enceinte 58 dans laquelle est disposé un système 60 de convoyage d'un objet 62 en regard de la sortie de gaz 78 de l'appareil 54.

Ce dispositif de traitement diffère du dispositif de traitement décrit en référence à la figure 2 par la présence d'un étranglement à effet venturi.

Comme précédemment, l'appareil d'excitation 54 comporte une première électrode excitatrice interne 64 revêtue d'une couche de matériau diélectrique 66 et de forme cylindrique. Elle est disposée à l'intérieur d'une seconde électrode excitatrice externe 68 également de forme cylindrique. Les deux électrodes excitatrices 64 et 68 sont disposées de façon coaxiale et délimitent entre elles une chambre 70 d'excitation de gaz en communication avec la source de gaz primaire 56.

La seconde électrode externe 68 est formée ici par la face interne concave d'un bloc métallique 72 longitudinal de forme externe généralement convexe et constitué par l'association de deux parties 74 et 76 complémentaires disposées en regard et espacées l'une de l'autre.

Les deux parties 74 et 76 sont séparées l'une de l'autre par deux passages, respectivement 78 et 80, constituant respectivement un passage d'entrée de gaz 80 dans la chambre 70 d'excitation et un passage de sortie de gaz 78 en communication avec l'enceinte 58.

Les deux électrodes sont reliées à une source 82 de haute tension alternative à haute fréquence en vue de leur polarisation.

Le bloc métallique 72 est disposé dans une cage 84 et est muni d'une fente longitudinale 86 disposée en regard du passage d'entrée 80 et en communication avec la source 56 de gaz.

La fente 86 de la cage 84 a une forme sensiblement de profile en V qui délimite un étranglement à effet Venturi provoquant de façon connue une augmentation de la vitesse du gaz délivré par la source 56 à la chambre d'excitation 70 ainsi qu'un abaissement correspondant de la pression de ce gaz.

La cage 84 et le bloc métallique 72 sont espacés et délimitent un canal 88 d'aspiration de gaz de forme ici courbée et s'étendant entre le passage d'entrée de gaz 80, en aval de l'étranglement à effet Venturi 86, et l'enceinte 58.

En fonctionnement, le gaz subit sous l'action de l'étranglement à effet Venturi 86 un abaissement de pression, comme mentionné précédemment. Cet abaissement de pression provoque une aspiration, par effet Venturi, du gaz présent dans le canal d'aspiration 88, et donc du gaz présent dans l'enceinte 58.

On conçoit donc que le gaz, après traitement de l'objet 62, subit une recirculation et est réinjecté dans la chambre d'excitation 70 (via le passage d'entrée) en vue de sa réexcitation, comme décrit précédemment en référence à la figure 2.

Le dispositif de traitement de surface qui vient d'être décrit permet, selon ce mode de réalisation, une économie considérable en gaz primaire de traitement puisque le gaz désexcité présent dans l'enceinte 58 est réinjecté (et donc réutilisé) dans la chambre d'excitation 70.

Dans les différents modes de réalisation qui ont été décrits, on conçoit que les dimensions de l'objet à traiter ne sont limitées que par la taille de l'enceinte.

Il est donc possible, à l'aide de ce dispositif de traiter des pièces de grandes dimensions, en particulier de volume élevé.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

On conçoit par exemple que si l'invention a été dans ce qui précède tout particulièrement illustrée à l'aide d'étranglements à effet Venturi se présentant sous la forme de fentes, d'autres configurations peuvent être envisagées telles que par exemple une rangée d'orifices régulièrement espacés ou non, ou encore à espacement déterminé et contrôlé, selon le procédé d'après les revendications 1 à 6.

## Revendications

1. Procédé de traitement de surface par voie sèche d'au moins une portion de surface d'un objet, selon lequel on fait passer un gaz primaire dans au moins un appareil (26;54) de formation d'espèces gazeuses excitées ou instables, et on amène ladite portion de surface (24;62) en regard de la sortie de gaz dudit appareil (26;54), en vue de son traitement par un gaz secondaire délivré à la dite sortie de gaz, et comportant des espèces gazeuses excitées ou instables,
caractérisé en ce que le gaz secondaire délivré en sortie du dit appareil et utilisé pour le traitement est reaspiré par effet venturi et reinjecté dans le dit appareil.

2. Procédé selon la revendication 1 caractérisé en ce que le dit gaz secondaire est substantiellement dépourvu d'espèces électriquement chargées.

3. Procédé selon l'une des revendications 1 et 2, caractérisé en ce que ledit gaz secondaire est à une pression voisine de la pression atmosphérique.

4. Procédé selon l'une des revendications précédentes, caractérisé en ce que la surface (24;62) de l'objet à traiter est amenée en regard de la dite sortie de gaz du dit appareil, le cas échéant en regard des sorties de gaz de plusieurs appareils de formation d'espèces gazeuses excitées ou instables disposés en parallèle sur la largeur de l'objet et/ou successivement en regard des sorties de gaz de plusieurs appareils de formation d'espèces gazeuses excitées ou instables disposés en série, au moyen d'un système de convoyage traversant un espace intérieur délimité par une enceinte, ladite enceinte étant raccordée de façon étanche audit(s) appareil(s) ou incluant ledit(s) appareil(s).

5. Procédé selon l'une des revendications précédentes, caractérisé en ce que ledit gaz primaire comporte au moins un gaz inerte et/ou un gaz oxydant et/ou un gaz réducteur.

6. Procédé selon l'une quelconque des revendications 1 à 5, caractérisé en ce que ladite surface (24;62) à traiter est en un matériau polymère.

7. Dispositif de traitement par voie sèche d'au moins une portion de surface (24;62) d'un objet, pour la mise en oeuvre du procédé de traitement de surface selon l'une quelconque des revendications 1 à 6, comportant au moins un appareil (26;54) de formation d'espèces gazeuses excitées ou instables comprenant un passage d'entrée de gaz (48;86) en communication avec une source (28;56) d'alimentation en gaz primaire et un passage de sortie de gaz secondaire excité (50;78) comportant des espèces excitées ou instables, et une enceinte (30;58) définissant un espace intérieur, raccordée de façon étanche audit(s) appareil(s) ou incluant ledit(s) appareil(s), ledit passage de sortie de gaz (50;78) débouchant à l'intérieur de l'enceinte,
caractérisé en ce qu'il comporte, au niveau d'au moins un des dits appareils :
- un étranglement (86) à effet Venturi disposé sur le trajet du gaz entre la source d'alimentation en gaz primaire (56) et ledit passage d'entrée (80), et
- un canal (88) de recirculation de gaz reliant l'espace intérieur de l'enceinte (58) et une zone située en aval dudit étranglement (86),
afin de permettre, sous l'action du gaz primaire délivré par la source d'alimentation en gaz primaire(56), l'aspiration par effet Venturi du gaz situé dans ladite enceinte (58) pour le reinjecter dans l'appareil (26;54) considéré de formation d'espèces gazeuses excitées ou instables.

8. Dispositif selon la revendication 7, caractérisé en ce qu'il comporte un système de convoyage (32;60) dudit objet à l'intérieur de l'espace intérieur délimité par l'enceinte, apte à pourvoir amener ladite surface (24;62) dudit objet en regard dudit passage de sortie de gaz (50;78).

9. Dispositif selon la revendication 7 ou 8, caractérisé en ce que ledit appareil (26;54) de formation d'espèces gazeuses excitées ou instables comporte, connectées à une source (52;82) de haute tension alternative à haute fréquence, une première électrode excitatrice interne (34;64) de forme cylindrique, et une seconde électrode excitatrice externe (38;68) de forme cylindrique et munie de fentes longitudinales sensiblement opposées constituant lesdits passages d'entrée (48;80) et de sortie (50;78) de gaz, lesdites première (34;64) et seconde (38;68) électrodes étant disposées de façon coaxiale et délimitant une chambre d'excitation de gaz (46;70), une couche d'un matériau diélectrique 36;66) étant disposée sur la surface d'au moins une des électrodes en regard de l'autre électrode.

## Patentansprüche

1. Verfahren zur Oberflächenbehandlung mindestens eines Oberflächenteils eines Gegenstandes durch einen Trockenprozeß, gemäß dem ein Primärgas in mindestens eine Einrichtung (26; 54) zur Bildung angeregter oder instabiler Gasspezies eingeleitet wird und der Oberflächenteil (24; 62) in eine Position gegenüber dem Gasauslaß der Einrichtung (26; 54) gebracht wird zum Zweck seiner Behandlung durch ein Sekundärgas, das am Gasauslaß abgegeben wird und angeregte oder instabile Gasspezies enthält,
dadurch gekennzeichnet, daß das am Auslaß der Einrichtung abgegebene und für die Behandlung verwendete Sekundärgas durch Venturi-Effekt wieder angesaugt und wieder in die Einrichtung eingeblasen wird.

2. Verfahren nach Anspruch 1, dadurch gekennzeichnet, daß das Sekundärgas im wesentlichen frei ist von elektrisch geladenen Spezies.

3. Verfahren nach einem der Ansprüche 1 und 2, dadurch gekennzeichnet, daß das Sekundärgas einen Druck nahe Atmosphärendruck hat.

4. Verfahren nach einem der vorhergehenden Ansprüche, dadurch gekennzeichnet, daß die Oberfläche (24; 62) des zu behandelnden Gegenstandes in eine Position gegenüber dem Gasauslaß der Einrichtung, gegebenenfalls in eine Position gegenüber den Gasauslässen mehrerer Einrichtungen zur Bildung angeregter oder instabiler Gasspezies, die parallel zur Längsausdehnung des Gegenstandes angeordnet sind, und/oder nacheinander in Positionen gegenüber Gasauslässen mehrerer in Reihe angeordneter Einrichtungen zur Bildung angeregter oder instabiler Gasspezies, geführt wird mittels einer Transporteinrichtung, die durch einen von einer Einschließung umgrenzten Innenraum führt, wobei die Einschließung mit der (den) Einrichtung(en) hermetisch verbunden ist oder die Einrichtung(en) umschließt.

5. Verfahren nach einem der vorhergehenden Ansprüche, dadurch gekennzeichnet, daß das Primärgas mindestens ein Inertgas und/oder ein oxidierendes Gas und/oder ein reduzierendes Gas enthält.

6. Verfahren nach einem der Ansprüche 1 bis 5, dadurch gekennzeichnet, daß die zu behandelnde Oberfläche (24; 62) aus einem Polymerwerkstoff besteht.

7. Vorrichtung zur Trockenbehandlung mindestens eines Oberflächenteils (24; 62) eines Gegenstandes, zur Durchführung des Verfahrens zur Oberflächenbehandlung nach einem der Ansprüche 1 bis 6, mit mindestens einer Einrichtung (26; 54) zur Bildung angeregter oder instabiler Gasspezies, die eine mit einer Primärgasversorgungsquelle (28; 56) in Verbindung stehende Gaseinlaßdurchführung (48; 86) und eine Auslaßdurchführung (50; 78) für angeregtes, angeregte oder instabile Gasspezies enthaltendes Sekundärgas aufweist, und einer einen Innenraum abgrenzenden Einschließung (30; 58), die mit der (den) Einrichtung(en) hermetisch verbunden ist oder die Einrichtung(en) umschließt, wobei die Gasauslaßdurchführung (50; 78) sich in das Innere der Einschließung öffnet,
dadurch gekennzeichnet, daß sie auf Höhe mindestens einer der Einrichtungen folgendes aufweist:
- eine Querschnittsverengung (86) mit Venturi-Effekt, die auf dem Weg des Gases zwischen der Primärgasversorgungsquelle (56) und der Einlaßdurchführung (80) angeordnet ist, und
- einen Gasrückleitungskanal (88), der den Innenraum der Einschließung (58) und eine stromabwärts von der Querschnittsverengung (86) gelegene Zone verbindet,
um durch die Wirkung des von der Primärgasversorgungsquelle (56) abgegebenen Primärgases das Ansaugen des in der Einschließung (58) befindlichen Gases durch Venturi-Effekt zu gestatten, um es wieder in die betreffende Einrichtung (26; 54) zur Bildung angeregter oder instabiler Gasspezies einzublasen.

8. Vorrichtung nach Anspruch 7, dadurch gekennzeichnet, daß sie im Inneren des durch die Einschließung umgrenzten Innenraums eine Einrichtung zum Transport (32; 60) des Gegenstandes aufweist, die geeignet ist, die Oberfläche (24; 62) des Gegenstandes in eine Position gegenüber der Gasauslaßdurchführung (50; 78) bringen zu können.

9. Vorrichtung nach einem der Ansprüche 7 oder 8, dadurch gekennzeichnet, daß die Einrichtung (26; 54) zur Bildung angeregter oder instabiler Gasspezies, verbunden mit einer Hochspannungsquelle (52; 82) für hochfrequente Wechselspannung, eine erste zylinderförmige, innere Erregerelektrode (34; 64) und eine zweite zylinderförmige, äußere Erregerelektrode (38; 68), die mit longitudinalen, im wesentlichen gegenüberliegenden Schlitzen versehen ist, die die Gaseinlaß- (48; 80) und Gasauslaßdurchführungen (50; 78) bilden, wobei die erste (34; 64) und zweite Elektrode (38; 68) in einer koaxialen und eine Gasanregungskammer (46; 70) umgrenzenden Weise angeordnet sind, wobei eine Schicht eines dielektrischen Materials (36; 66) auf der Oberfläche mindestens einer der Elektroden gegenüber der anderen Elektrode angeordnet ist, aufweist.

## Claims

1. Process for dry surface treatment of at least one surface portion of an object, according to which a primary gas is passed through at least one instrument (26;54) for forming excited or unstable gas species, and the said surface portion (24;62) is brought in front of the gas outlet of the said instrument (26;54) with a view to treating it with a secondary gas which is delivered to the said gas outlet, and contains excited or unstable gas species, characterized in that the secondary gas delivered through the outlet of the said instrument and used for the treatment is taken in again by the Venturi effect and reinjected into the said instrument.

2. Process according to Claim 1, characterized in that the said secondary gas is substantially free of electrically charged species.

3. Process according to one of Claims 1 and 2, characterized in that the said secondary gas is at a pressure close to atmospheric pressure.

4. Process according to one of the preceding claims, characterized in that the surface (24;62) of the object to be treated is brought in front of the said gas outlet of the said instrument, where appropriate in front of the gas outlets of a plurality of instruments for forming excited or unstable gas species which are arranged in parallel over the width of the object and/or successively in front of the gas outlets of a plurality of instruments for forming excited or unstable gas species which are arranged in series, by means of a conveyor system which passes through an internal space defined by an enclosure, the said enclosure being connected in leaktight fashion to the said instrument(s) or including the said instrument(s).

5. Process according to one of the preceding claims, characterized in that the said primary gas includes at least an inert gas and/or an oxidizing gas and/or a reducing gas.

6. Process according to any one of Claims 1 to 5, characterized in that the said surface (24;62) to be treated is made of a polymer.

7. Device for dry treatment of at least one surface portion (24;62) of an object, for implementing the surface treatment process according to any one of Claims 1 to 6, having at least one instrument (26;54) which is intended to form excited or unstable gas species and comprises a gas inlet passage (48;86) in communication with a primary gas supply source (28;56) and an outlet passage (50;78) for excited secondary gas including excited or unstable species, and an enclosure (30;58) which defines an internal space and is connected in leaktight fashion to the said instrument(s) or includes the said instrument(s), the said gas outlet passage (50;78) opening into the interior of the enclosure, characterized in that it has, at at least one of the said instruments:
- a Venturi-effect constriction (86) arranged on the path of the gas between the primary gas supply source (56) and the said inlet passage (80),
- a gas recirculation channel (88) which connects the interior space of the enclosure (58) to a zone located downstream of the said constriction (86) in order to make it possible, under the effect of the primary gas delivered by the primary gas supply source (56), to take in gas located in the said enclosure (58) by the Venturi effect in order to reinject it into the instrument (26; 54) in question for forming excited or unstable gas species.

8. Device according to Claim 7, characterized in that it has a system (32;60) for conveying the said object inside the internal space bounded by the enclosure, which can bring the said surface (24;62) of the said object in front of the said gas outlet passage (50;78).

9. Device according to Claim 7 or 8, characterized in that the said instrument (26;54) for forming excited or unstable gas species has, connected to a high-frequency AC high-voltage source (52;82), an inner first exciting electrode (34;64) of cylindrical shape, and an outer second exciting electrode (38;68) which is of cylindrical shape and is provided with substantially opposite longitudinal slots which form the said gas inlet (48;80) and outlet (50;78) passages, the said first (34;64) and second (38;68) electrodes being arranged coaxially and bounding a gas excitation chamber (46;70), a layer of a dielectric (36;66) being arranged on the surface of at least one of the electrodes, facing the other electrode.
